Europäisches Patentamt

European Patent Office

Office européen des brevets

(19)

(11) **EP 1 097 593 B1**

(12) **FASCICULE DE BREVET EUROPEEN**

(45) Date de publication et mention
de la délivrance du brevet:
**20.02.2002 Bulletin 2002/08**

(21) Numéro de dépôt: **99931352.1**

(22) Date de dépôt: **16.07.1999**

(51) Int Cl.⁷: **H04N 7/52**, H04N 5/278

(86) Numéro de dépôt international:
**PCT/FR99/01736**

(87) Numéro de publication internationale:
**WO 00/04724 (27.01.2000 Gazette 2000/04)**

(54) **PROCEDE POUR GERER TEMPORELLEMENT L'EXPLOITATION DE DONNEES ET DISPOSITIF METTANT EN OEUVRE LE PROCEDE**

GERÄT UND VERFAHREN FÜR DIE ZEITLICHE VERWALTUNG VON DATEN

METHOD FOR TIMING DATA PROCESSING AND IMPLEMENTING DEVICE

(84) Etats contractants désignés:
**AT BE CH CY DE DK ES FI FR GB GR IE IT LI LU MC NL PT SE**

(30) Priorité: **17.07.1998 FR 9809173**

(43) Date de publication de la demande:
**09.05.2001 Bulletin 2001/19**

(73) Titulaire: **THOMSON multimedia
92100 Boulogne Billancourt (FR)**

(72) Inventeur: **Mace, Philippe, Thomson Multimedia
92100 Boulogne Billancourt (FR)**

(74) Mandataire: **Kohrs, Martin et al
Thomson multimedia 46, quai A. Le Gallo
92100 Boulogne-Billancourt (FR)**

(56) Documents cités:
**EP-A- 0 765 082**

## Description

L'invention concerne un procédé pour gérer temporellement l'exploitation de données détectées dans un flux de données ainsi que le dispositif mettant en oeuvre le procédé.

L'invention trouve une application particulièrement avantageuse pour gérer temporellement l'affichage de sous-titres obtenus à partir de données numériques détectées dans un flux de données véhiculées notamment mais non exclusivement selon la norme de transport MPEG 2 System.

Dans la plupart des cas, un flux de données véhiculées selon la norme de transport MPEG 2 System comprend un signal de référence temporelle communément noté PCR (l'abréviation PCR provient de l'anglais " Programme Clock Reference"). Le signal de référence PCR permet d'établir une échelle des temps pour les données contenues dans le flux. Par ailleurs, le flux de données contient également des signaux de synchronisation communément notés PTS (l'abréviation PTS provient de l'anglais " Présentation Time Stamp". Un signal de synchronisation PTS est un signal permettant de mettre en oeuvre une action sur certaines des données véhiculées par le flux. Pour les données correspondant à un sous-titre, il peut s'agir, par exemple, de l'action d'affichage du sous-titre en synchronisation avec l'apparition d'une image. Le signal PTS d'affichage associé à un sous-titre est véhiculé dans l'en-tête du sous-titre. Sa valeur donne l'instant auquel le sous-titre doit être affiché.

Les sous-titres sont généralement constitués de données codées. Il est donc nécessaire de les décoder avant de les afficher. Par données codées il faut entendre, par exemple, des données compresser qu'il faut décompresser avant affichage.

Au cas où, par exemple, l'instant auquel un sous-titre doit être affiché est très proche de l'instant auquel ce sous-titre est détecté dans le flux, l'affichage d'un sous-titre peut présenter des inconvénients. Par " très proche dans le temps", il faut entendre que la durée qui sépare l'instant auquel le sous-titre est détecté est du même ordre de grandeur ou inférieur à la durée nécessaire au décodage des données qui représentent le sous-titre. Dans ces conditions, la durée d'affichage du sous-titre peut être très courte et, à l'extrême, le sous-titre peut être perdu.

Par ailleurs, dans d'autres cas, le flux de données véhiculées selon la norme MPEG 2 System ne contient pas de signal PTS d'affichage des sous-titres. Ces cas correspondent, par exemple, au sous-titrage simultané pour lequel il est souhaité que les sous-titres soient affichés dès que possible après avoir été détectés et décodés. Dans ces cas, quand un sous-titre court succède à un sous-titre long, la durée d'affichage du sous-titre long peut être inférieure à la durée d'affichage du sous-titre court. En effet, la durée possible d'affichage ΔST1 est alors égale à :

$$\Delta ST1 = \Delta T + DST2 - DST1,$$

où :

ΔT est l'intervalle de temps séparant le premier sous-titre ST1 et le sous-titre ST2 qui succède au sous-titre ST1,
DST1 est la durée de décodage du sous-titre ST1, et
DST2 est la durée de décodage du sous-titre ST2.

Pour des sous-titres ST1 et ST2 respectivement long et court, les durées DST2 et DST1 sont respectivement courtes et longues. Il s'ensuit que la durée d'affichage du sous-titre long ST1 est d'autant plus courte que le sous-titre ST2 est un sous-titre court et le sous-titre ST1 est un sous-titre long.

L'invention ne présente pas ces inconvénients.

En effet, l'invention concerne un dispositif pour gérer temporellement l'exploitation de données détectées dans un flux de données et constituant au moins un ensemble de données, le dispositif comprenant un circuit de traitement des données détectées, une mémoire de stockage des données détectées, les données en train d'être traitées, les données traitées destinées à être exploitées et les données traitées en cours d'exploitation, l'exploitation des données traitées devant être déclenchée à un instant théorique donné. Le dispositif comprend un circuit de calcul d'une durée minimale d d'exploitation des données proportionnelle à la quantité de données contenues dans l'ensemble de données.

L'invention concerne également un procédé pour gérer temporellement l'exploitation de données détectées dans un flux de données et constituant au moins un ensemble de données, le procédé comprenant une étape de stockage des données détectées, une étape de traitement des données stockées, une étape de stockage des données issues de l'étape de traitement et une étape d'exploitation des données stockées issues de l'étape de traitement, l'exploitation des données traitées devant être déclenchée à un instant théorique donné. Le procédé comprend une étape de calcul d'une durée minimale d d'exploitation des données proportionnelle à la quantité de données contenues dans l'ensemble des données.

L'invention trouve une application particulièrement avantageuse dans le cas où l'ensemble de données détectées dans le flux de données représente un sous-titre constitué de données codées, lequel sous-titre doit être affiché sur écran après décodage des données. Le décodage des données constitue alors le traitement des données et l'affichage des données constitue l'exploitation des données.

Ainsi, l'invention concerne également un dispositif tel que celui selon l'invention mentionné ci-dessus, caractérisé en ce que l'ensemble de données détectées représente un sous-titre constitué de données codées détectées dans un flux de données véhiculées selon la norme de transport MPEG 2 System, non exclusivement, et en ce que le circuit de traitement est un circuit de décodage des données codées, l'exploitation des données étant l'affichage des données sur écran.

L'invention concerne encore un décodeur fonctionnant selon une norme de compression du type MPEG 2 vidéo, caractérisé en ce qu'il comprend un dispositif tel que celui selon l'invention mentionné ci-dessus.

De même, l'invention concerne un procédé tel que celui selon mentionné ci-dessus, caractérisé en ce que l'ensemble de données détectées dans le flux de données représente un sous-titre constitué de données codées détectées dans un flux de données véhiculées selon la norme de transport MPEG 2 System, en ce que le traitement des données est le décodage des données codées et en ce que l'exploitation des données est l'affichage des données sur écran.

L'objet de l'invention est de garantir une durée minimale d d'exploitation d'un ensemble de données proportionnelle à la quantité de données que contient cet ensemble.

Une fois calculée, la durée minimale d est appliquée à un circuit de commande de la durée d'exploitation de façon que la durée d'exploitation des données ne puisse être inférieure à d.

Dans le cadre de l'application particulière de l'invention à l'affichage de sous-titres, la durée minimale d'affichage du sous-titre peut être donnée par la donnée D(ST) telle que :

$D(ST) = K_{ST} \times L$, L étant la longueur du sous-titre et $K_{ST}$ un nombre réel positif.

La longueur L peut être l'information de longueur du sous-titre que contient le flux de données. La longueur L peut aussi être égale au nombre de pleines lignes du sous-titre décodé exprimé sous la forme d'un nombre réel. D'autres données relatives au sous-titre peuvent également être utilisées pour calculer la donnée D(ST). Il peut s'agir, par exemple, d'un paramètre m dépendant de la complexité de la langue dans laquelle le sous-titre doit être affiché. Dans ce cas, un ensemble de langues comprises dans une table non décrite sont associées à des coefficients de pondérations permettant de varier le paramètre m en fonction de la langue. La donnée D(ST) s'écrit alors :

$$D(ST) = K_{ST} \times L \times m.$$

Ainsi, l'invention trouve une application particulièrement intéressante pour la diffusion d'un même programme sur un territoire où sont utilisées différentes langues.

Selon un perfectionnement de l'invention, la durée minimale d'exploitation des données est rendue compatible de contraintes de synchronisation, de durées de traitement des données avant exploitation et de mémoire vive à disposition pour stocker les données.

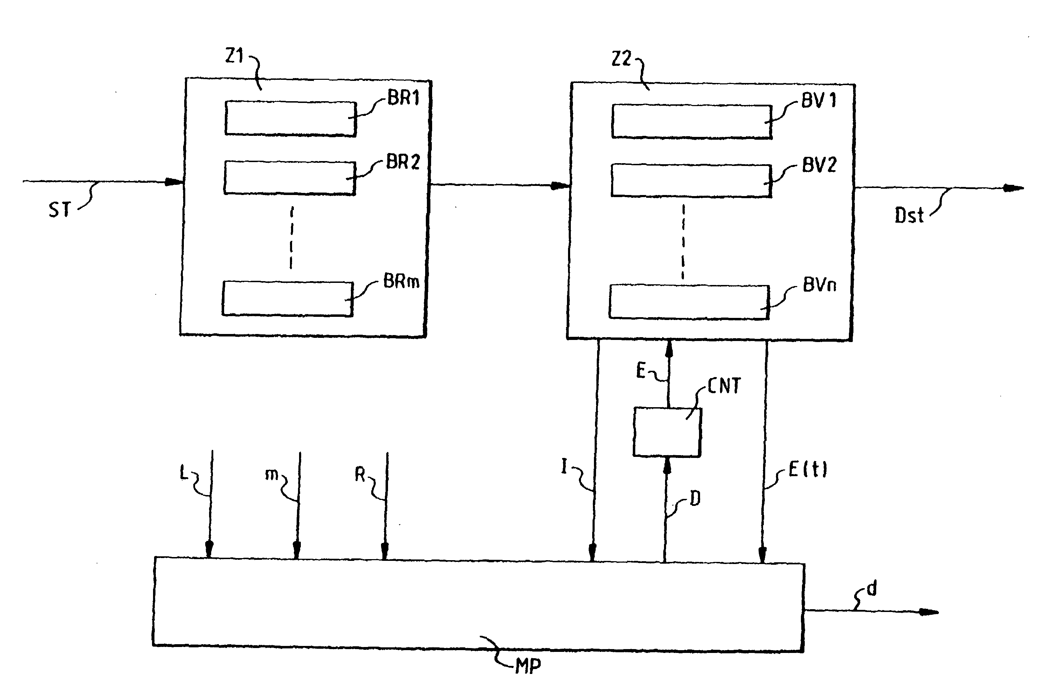

La figure jointe représente un dispositif permettant la mise en oeuvre du perfectionnement de l'invention. A titre d'exemple non limitatif, ce perfectionnement est décrit dans le cadre de l'application particulière de l'affichage de sous-titres.

Le dispositif comprend deux zones mémoires Z1 et Z2, un compteur CNT et un microprocesseur MP.

Les zones mémoire Z1 et Z2 sont des zones de mémoire vive de type RAM (l'abréviation RAM provenant de l'anglais "Random Access Memory"). La zone mémoire Z1 est divisée en plusieurs espaces mémoire BR1, BR2..., BRm qui seront par la suite appelés buffers de réception. De même, la zone mémoire Z2 est divisée en plusieurs espaces mémoire BV1, BV2, ...Bvn qui seront par la suite appelés buffers de visualisation. Comme cela est connu de l'homme de l'art, un buffer de visualisation est un espace mémoire capable de permettre l'affichage sur écran des données qu'il contient.

Les données qui représentent les sous-titres constituent un signal ST transmis à la zone mémoire Z1. Selon l'invention, les données qui représentent un sous-titre sont stockées dans un premier buffer de réception BR1. Si le traitement des données effectué dans la zone de mémoire Z2 n'est pas terminé, alors les données qui représentent le sous-titre suivant sont stockées dans un autre buffer de réception BR2. Les sous-titres stockés dans la zone mémoire Z1 sont transmis à la zone mémoire Z2 les uns après les autres de façon qu'un sous-titre transmis dans la zone Z2 soit toujours le plus ancien stocké dans la zone Z1.

Selon le mode de réalisation préférentiel de l'invention, chaque buffer de la zone Z2 se trouve soit en état de décodage des données qu'il contient, soit vide de toute donnée, soit en état d'attente d'affichage, soit en état d'affichage. Par buffer en " état d'attente d'affichage ", il faut entendre que les données contenues dans le buffer sont destinées à être lues pour affichage. Par buffer " en état d'affichage ", il faut entendre que les données contenues dans le buffer sont en cours de lecture de façon à être affichées sur écran.

Selon un autre mode de réalisation de l'invention, le décodage des données n'est pas effectué dans un buffer de visualisation de la zone Z2 mais dans un buffer de réception de la zone Z1. Il est alors possible que l'opération de décodage des données s'effectue au fur et à mesure de leur réception.

De façon préférentielle, la zone mémoire Z2 est divisée en 5 buffers de visualisation dont chacun est susceptible de se trouver soit en état de décodage, soit vide de données, soit en état d'attente d'affichage, soit en état d'affichage. Selon le mode de réalisation préférentiel de l'invention, un buffer de visualisation se trouve en permanence en état de décodage et un autre en état d'affichage. Il s'ensuit que les 3 autre buffers se trouvent soit vides de données, soit en état d'attente d'affichage.

De façon générale, si n est le nombre de buffers que contient la zone Z2, alors n-2 buffers sont soit vides de données, soit en attente d'affichage.

A chaque fois qu'un buffer passe à l'état d'attente d'affichage, un information I est transmise de la zone mémoire Z2 vers le microprocesseur MP. En retour, le microprocesseur MP transmet au compteur CNT une donnée D permettant d'incrémenter ce demier d'une unité. Le compteur transmet alors à la zone mémoire Z2 une donnée E permettant d'étiqueter le buffer qui vient de passer à l'état d'attente d'affichage. Au moment de l'affichage, le buffer en état d'affichage est alors identifié comme étant celui dont l'étiquette signale qu'il est le plus ancien.

De façon générale, la durée d d'affichage calculée par le microprocesseur MP à un instant t peut s'écrire :

$$d = D(ST) \times X(t),$$

où

- D(ST) est la donnée proportionnelle à la longueur L du sous-titre telle que définie précédemment, et
- X(t) une fonction croissante de la taille d'une zone de la mémoire Z2 ou Z1 + Z2 vide de données.

Avantageusement, la durée minimale d'affichage d'un sous-titre peut ainsi être augmentée quand la taille de la zone de mémoire vide de données augmente et diminuée quand la taille de la zone de mémoire vide de données diminue.

Selon un mode de réalisation particulier du perfectionnement de l'invention, la donnée X(t) est calculée de façon à tendre vers une donnée $X_o$ qui ne peut être dépassée. Il est alors avantageusement possible d'éviter une accumulation du retard d'affichage des sous-titres.

Selon le mode de réalisation préférentiel de l'invention, la donnée X(t) est calculée selon un algorithme mettant en oeuvre des calculs de type PID (de l'abréviation Proportionnel/Intégral/Différentiel).

L'équation qui régit le régime proportionnel est donnée par la formule:

$$Xp(t+\triangle t) = Kp \times EM(t+\triangle t),$$

où

- Kp est un nombre réel positif, et
- $EM(t+\triangle t)$ est une donnée représentant la taille d'une zone de mémoire vide de données à l'instant $t+\triangle t$, l'intervalle de temps $\triangle t$ étant une durée représentant la détection de deux sous-titres successifs dans le flux. A titre d'exemple non limitatif, $\triangle t$ peut être égal à la durée moyenne séparant la détection de deux sous-titres successifs calculée sur la base de n sous-titres précédemment détectés, n étant un nombre entier, par exemple, égal à 10.

La donnée $EM(t+\triangle t)$ peut être égale soit au nombre N de buffers de visualisation ou de réception entièrement vides de données à l'instant $t+\triangle t$, soit au nombre N de buffers de visualisation ou de réception entièrement vides de données à l'instant $t+\triangle t$ plus, à ce même instant, l'espace mémoire vide de données du buffer de visualisation ou de réception en état de décodage.

L'équation qui régit le régime intégral est donnée par la formule :

$$Xi(t+\triangle t) = Ki \times I(t+\triangle t),$$

où

$I(t+\triangle t) = I(t) - R$, avec $I(t+\triangle t)$ tel que $-I1 < I(t+\triangle t) < I2$ (I1 et I2 positifs) et $R = T_A - T_R$.

Les valeurs I1 et I2 sont choisies de façon à limiter l'influence du terme intégral $Xi(t+\triangle t)$. $T_A$ est l'instant où débute réellement l'affichage du sous-titre et $T_R$ l'instant théorique où le sous-titre doit être affiché. La quantité R représente ainsi le retard calculé algébriquement entre l'instant où débute réellement l'affichage du sous-titre et l'instant théorique où le sous-titre doit être affiché.

Dans le cas où existe dans le flux un signal PTS relatif à l'affichage de sous-titre, l'instant $T_R$ est la valeur du PTS. Dans le cas où n'existe pas de signal PTS dans le flux, l'instant $T_R$ est une référence temporelle dont la valeur est telle que, par exemple, la quantité $T_A-T_F$ soit égale à y% de la durée de décodage du sous-titre, $T_F$ étant l'instant où le sous-titre est détecté dans le flux. A titre d'exemple non limitatif, y peut être égal à 120.

La durée d minimale d'affichage d'un sous-titre croît de la quantité R si R est négatif et décroît de la quantité R si R est positif. Le terme intégral $Xi(t+\triangle t)$ permet ainsi une gestion avantageuse des retards r successifs.

L'équation qui régit le régime différentiel est donnée par la formule :

$$Xd(t+\triangle t) = -Kd \times (EM(t+\triangle t)-EM(t))/\triangle t$$

où Kd est un nombre réel positif.

La contribution du terme différentiel à la fonction X(t) permet avantageusement de prendre en compte la vitesse avec laquelle évolue la taille de la zone de mémoire vide de données.

Selon le mode de réalisation préférentiel mentionné ci-dessus, la durée d'affichage d d'un sous-titre est calculée selon un algorithme mettant en oeuvre des calculs de type PID. Il s'en suit qu'à l'instant t+△t la durée d est proportionnelle à la grandeur $X_{p,i,d}(t+\Delta t)$ telle que :

$X_{p,i,d}(t+\Delta t) = X_p(t+\Delta t) + X_i(t+\Delta t) + X_d(t+\Delta t)$ avec $X_{min} < X_{p,i,d}(t+\Delta t) < X_o$, où $X_{min}$ est, par exemple, une durée telle que la durée d soit sensiblement égale à 350ms, durée en dessous de laquelle un oeil humain ne prend plus conscience du passage d'un sous-titre à l'écran.

L'invention concerne également d'autres algorithmes de calculs de la durée d. Il peut s'agir, entre autres, d'un algorithme de calcul de type proportionnel (seul le terme proportionnel tel que calculé ci-dessus intervient alors dans l'expression de $X(t+\Delta t)$), ou encore d'un algorithme de calcul de type proportionnel/integral (seuls les termes proportionnel et intégral tels que calculés ci-dessus interviennent alors dans l'expression de $X(t+\Delta t)$). De façon générale, comme mentionné précédemment, l'algorithme de calcul de la durée d minimale d'affichage d'un sous-titre est une fonction croissante d'une zone de mémoire vive de données. L'algorithme de calcul selon l'invention peut être un algorithme mettant en oeuvre la logique floue.

Une fois calculée, la durée minimale d'affichage d'un sous-titre d est appliquée à un circuit (non représenté sur la figure) qui commande l'affichage des données de sous-titres Dst issues du buffer de visualisation en état d'affichage. La durée d'affichage du soustitre est alors garantie comme ne pouvant pas être inférieure à d.

Bien sûr, l'invention n'est pas limitée au mode de réalisation décrit.

## Revendications

1. Dispositif pour gérer temporellement l'exploitation de données détectées dans un flux de données et constituant au moins un ensemble de données, le dispositif comprenant un circuit de traitement des données détectées, une mémoire (Z1, Z2) permettant de stocker les données détectées, les données en train d'être traitées, les données traitées destinées à être exploitées et les données traitées en cours d'exploitation, l'exploitation des données traitées devant être déclenchée à un instant théorique donné ($T_R$), **caractérisé en ce qu'**il comprend un circuit (MP) de calcul d'une durée minimale (d) d'exploitation des données proportionnelle à la quantité (L) de données contenues dans l'ensemble de données.

2. Dispositif selon la revendication 1, **caractérisé en ce que** la durée minimale (d) est une fonction croissante de la taille d'une zone de la mémoire (Z1, Z2) vide de données.

3. Dispositif selon la revendication 2, **caractérisé en ce que** la durée minimale (d) est proportionnelle, à l'instant t+△t, à la grandeur $X_p(t+\Delta t)$ telle que :

$$X_p(t+\Delta t) = K_P x EM(t+\Delta t)$$

où

$K_P$ est un nombre réel positif et $EM(t+\Delta t)$ une donnée représentant la taille de la zone de la mémoire (Z1, Z2) vide de données à l'instant t+△t, △t représentant la durée séparant la détection de deux ensembles de données successifs.

4. Dispositif selon la revendication 3, **caractérisé en ce que** la durée minimale (d) est proportionnelle, à l'instant t+△t, à la grandeur $X_{p,i}(t+\Delta t)$ telle que :

$$X_{p,i}(t+\Delta t) = X_p(t+\Delta t) + Ki \times I(t+\Delta t),$$

où

$Ki$ est un nombre réel positif, et
$I(t+\Delta t) = I(t) - R$ avec $I(t+\Delta t)$ tel que $-I1 < I(t+\Delta t) < I2$ et
$R = T_A - T_R$, $T_A$ étant l'instant où débute l'exploitation des données et $T_R$ l'instant théorique où l'exploitation des données doit être déclenchée.

5. Dispositif selon la revendication 4, **caractérisé en ce que** la durée minimale est proportionnelle, à l'instant t+△t, à la grandeur $X_{p,i,d}(t+\Delta t)$ telle que :

$$X_{p,i,d}(t+\Delta t) = X_{p,i}(t+\Delta t) - Kd \times (EM(t+\Delta)-EM(t))/\Delta t,$$

où

$Kd$ est un nombre réel positif.

6. Dispositif selon l'une quelconque des revendications 1 à 5, **caractérisé en ce que** la zone de la mémoire (Z1, Z2) pour stocker les données traitées destinées à être exploitées est divisée en différents espaces mémoire contenant chacun un ensemble de données et **en ce qu'**il comprend un compteur (CNT) pour étiqueter les différents espaces mémoire au fur et à mesure de leur remplissage de façon que les données exploitées soient celles contenues dans l'espace mémoire étiqueté en premier.

7. Dispositif selon l'une quelconque des revendications 1 à 6, **caractérisé en ce que** l'ensemble de données détectées représente un sous-titre constitué de données codées détectées dans un flux de données véhiculées selon la norme de transport MPEG 2 System et **en ce que** le circuit de traitement est un circuit de décodage des données codées, l'exploitation des données étant l'affichage des données décodées sur écran.

8. Décodeur fonctionnant selon la norme MPEG 2 vidéo, **caractérisé en ce qu'**il comprend un dispositif selon la revendication 7.

9. Procédé pour gérer temporellement l'exploitation de données détectées dans un flux de données et constituant au moins un ensemble de données, le procédé comprenant une étape de stockage des données détectées, une étape de traitement des données stockées, une étape de stockage des données issues de l'étape de traitement et une étape d'exploitation des données stockées issues de l'étape de traitement, l'exploitation des données traitées devant être déclenchée à un instant théorique donné ($T_R$), **caractérisé en ce qu'**il comprend une étape de calcul d'une durée minimale (d) d'exploitation des données proportionnelle à la quantité de données (L) contenues dans l'ensemble de données.

10. Procédé selon la revendication 9, **caractérisé en ce que** la durée minimale (d) est une fonction croissante de la taille d'une zone de stockage des données vide de données.

11. Procédé selon la revendication 10, **caractérisé en ce que** la fonction croissante est proportionnelle à la grandeur Xp(t+$\Delta$t) telle que :

$$Xp(t+\Delta t) = K_P \times EM(t+\Delta t),$$

où

$K_P$ est un nombre réel positif et EM(t+$\Delta$t) une donnée représentant la taille de la zone de stockage de données vide de données à l'instant t+$\Delta$t, $\Delta$t étant une durée représentant la détection de deux sous-titres successifs.

12. Procédé selon la revendication 11, **caractérisé en ce que** la fonction croissante est proportionnelle à la grandeur Xp,i(t+$\Delta$t) telle que :

$$Xp,i(t+\Delta t) = Xp(t+\Delta t) + Ki \times I(t+\Delta t),$$

où

Ki un nombre réel positif, et
I(t+$\Delta$t) = I(t) - R avec I(t+$\Delta$t) tel que -I1 < I(t+$\Delta$t) < I2, et
R = $T_A$ - $T_R$, $T_A$ étant l'instant où débute l'exploitation des données et $T_R$ l'instant théorique où l'exploitation des données doit être déclenchée.

13. Procédé selon la revendication 12, **caractérisé en ce que** la fonction croissante est proportionnelle à la grandeur Xp,i,d(t+$\triangle$t) telle que :

$$Xp,i,d(t+\triangle t) = Xp,i(t+\Delta t) - Kd \times (EM(t+\Delta t)-EM(t))/\Delta t,$$

où

Kd est un nombre réel positif.

14. Procédé selon l'une quelconque des revendications 9 à 13, **caractérisé en ce qu'**il comprend une étape de comptage permettant que les données exploitées soient les données issues de l'étape de traitement stockées depuis le plus longtemps.

15. Procédé selon l'une quelconque des revendications 9 à 14, **caractérisé en ce que** l'ensemble de données détectées dans le flux de données représente un sous-titre constitué de données codées dans un flux de données véhiculées selon la norme de transport MPEG 2 System, **en ce que** la traitement des données est le décodage des données codées et **en ce que** l'exploitation des données est l'affichage des données décodées sur écran.

16. Procédé selon la revendication 15, **caractérisé en ce que** la durée minimale (d) d'affichage des données décodées est proportionnelle à un paramètre (m) dépendant de moyens de pondérations liés à la langue dans laquelle le sous-titre doit être affiché.

**Patentansprüche**

1. Vorrichtung zur zeitlichen Steuerung der Auswertung von Daten, die in einem Datenfluß detektiert werden und wenigstens einen Datensatz darstellen, wobei die Vorrichtung eine Schaltung zur Verarbeitung der detektierten Daten, einen Speicher (Z1, Z2), der die Speicherung der detektierten Daten, der derzeit verarbeiteten Daten, der für die Auswertung vorgesehenen, verarbeiteten Daten und der bei der Auswertung verarbeiteten Daten ermöglicht, enthält, wobei die Auswertung der verarbeiteten Daten bei einem bestimmten theoretischen Zeitpunkt ($T_R$) ausgelöst werden muß, **gekennzeichnet durch** eine Schaltung (MP) für die Berechnung einer minimalen Auswertdauer (d) für die Daten, die proportional zu der Menge (L) der in dem Datensatz enthaltenen Daten ist.

2. Vorrichtung nach Anspruch 1, **dadurch gekennzeichnet, daß** die Minimaldauer (d) eine ansteigende Funktion der Größe eines Bereichs des keine Daten enthaltenden Speichers (Z1, Z2) ist.

3. Vorrichtung nach Anspruch 2, **dadurch gekennzeichnet, daß** die Minimaldauer (d) im Zeitpunkt t+∆t proportional zu der Größe Xp(t+∆t) ist, derart, daß

$$Xp(t+\Delta t) = K_p x EM(t+\Delta t),$$

wobei

Kp eine positive reelle Zahl und EM(t+∆t) ein Datenelement ist, das die Größe des Bereichs des Speichers (Z1, Z2) ohne Daten im Zeitpunkt t+∆t darstellt, wobei ∆t die Dauer darstellt, die die Detektion der beiden aufeinanderfolgenden Datenelemente trennt.

4. Vorrichtung nach Anspruch 3, **dadurch gekennzeichnet, daß** die Minimaldauer (d) zum Zeitpunkt t+∆t proportional zu der Menge Xp,i(t+∆t) ist, derart, daß:

$$Xp,i(t+\Delta t) = Xp(t+\Delta t) + Ki \; x \; I(t+\Delta t),$$

wobei

Ki eine positive reelle Zahl ist und
I(t+∆t) = I(t) - R mit I(t+∆t), so daß -I1<I(t+∆t)<I2 und
R = $T_A$ - $T_{R1}$ $T_A$ der Zeitpunkt ist, wo die Auswertung der Daten beginnt, und $T_R$ der theoretische Zeitpunkt ist, wo die Auswertung der Daten ausgelöst werden soll.

5. Vorrichtung nach Anspruch 4, **dadurch gekennzeichnet, daß** die Minimaldauer im Zeitpunkt t+∆t proportional zu der Menge Xp,i,d(t+∆t) ist, derart, daß

$$Xp,i,d(t+\Delta t) = Xp,i,(t+\Delta t) - Kd \; x \; (EM(t+\Delta)-EM(t)/\Delta t),$$

wobei
Kd eine positive reelle Zahl ist.

6. Vorrichtung nach einem der Ansprüche 1 bis 5, **dadurch gekennzeichnet, daß** der Bereich des Speichers (Z1, Z2) zur Speicherung der verarbeiteten Daten, die ausgewertet werden sollen, in mehrere Speicherplätze aufgeteilt ist, von denen jeder einen Datensatz enthält, und daß die Vorrichtung einen Zähler (CNT) zum Etikettieren der verschiedenen Speicherplätze entsprechend ihrer Füllung enthält, so daß die ausgewerteten Daten diejenigen sind, die in dem zuerst etikettierten Speicherplatz enthalten sind.

7. Vorrichtung nach einem der Ansprüche 1 bis 6, **dadurch gekennzeichnet, daß** der Satz der detektierten Daten einen Untertitel darstellt, der aus kodierten Daten besteht, die in einem Datenfluß gemäß der MPEG 2-System-Transportnorm übertragen werden, und daß die Verarbeitungsschaltung eine Schaltung zum Dekodieren der kodierten Daten ist und die Auswertung der Daten in der Darstellung der dekodierten Daten auf einem Bildschirm besteht.

8. Dekoder, der nach der Videonorm MPEG 2 arbeitet, **dadurch gekennzeichnet, daß** er eine Vorrichtung nach Anspruch 7 enthält.

9. Verfahren zur zeitlichen Steuerung der Auswertung von Daten, die in einem Datenfluß detektiert werden und wenigstens einen Satz von Daten bilden, wobei das Verfahren einen Schritt zur Speicherung der detektierten Daten, einen Schritt zur Verarbeitung der gespeicherten Daten, einen Schritt zur Speicherung der aus dem Schritt zur Verarbeitung hervorgehenden Daten und einen Schritt zur Auswertung der gespeicherten Daten aus dem Schritt der Verarbeitung enthält und die Auswertung der verarbeiteten Daten zu einem bestimmten theoretischen Zeitpunkt ($T_R$) ausgelöst werden soll, **gekennzeichnet durch** einen Schritt zur Berechnung einer Minimaldauer (d) der Auswertung der Daten, die proportional ist zu der Menge der in dem Datensatz enthaltenen Daten (L).

10. Verfahren nach Anspruch 9, **dadurch gekennzeichnet, daß** die Minimaldauer (d) eine zunehmende Funktion der Größe eines keine Daten enthaltenden Speicherbereichs ist.

11. Verfahren nach Anspruch 10, **dadurch gekennzeichnet, daß** die zunehmende Funktion proportional zu der Menge Xp(t+∆t) ist, derart, daß:

$$Xp(t+\Delta t) = K_P \; x \; EM(t+\Delta t),$$

wobei

$K_P$ eine positive reelle Zahl und EM(t+∆t) ein Datenelement ist, das die
Größe des keine Daten enthaltenden Datenspeicherbereichs im
Zeitpunkt t+∆t darstellt, wobei ∆t eine Dauer ist, die die Detektion der beiden aufeinanderfolgenden Untertitel darstellt.

12. Verfahren nach Anspruch 11, **dadurch gekennzeichnet, daß** die zunehmende Funktion proportional zu der Menge Xp,i(t+∆t) ist, derart, daß:

$$Xp,i(t+\Delta t) = Xp(t+\Delta t) + Ki \times I(t+\Delta t),$$

wobei

Ki eine positive reelle Zahl ist und
I(t+$\Delta$t) = I(t) - R mit I(t+$\triangle$t) so daß -I1 < I(t+$\Delta$t) < I2, und
R = $T_A$ - $T_R$, $T_A$ der Zeitpunkt ist, wo die Auswertung der Daten beginnt, und $T_R$ der theoretische Zeitpunkt ist, wo die Auswertung der Daten ausgelöst werden soll.

13. Verfahren nach Anspruch 12, **dadurch gekennzeichnet, daß** die ansteigende Funktion proportional zu der Menge Xp,i,d(t+$\Delta$t) ist, derart, daß:

$$Xp,i,d(t+\Delta t) = Xp,i(t+\triangle t) - Kd \times (EM(t+\Delta t)-EM(t)/\Delta t),$$

wobei
Kd eine positive reelle Zahl ist.

14. Verfahren nach einem der Ansprüche 9 bis 13, **gekennzeichnet durch** einen Schritt zum Zählen, der es ermöglicht, daß die ausgewerteten Daten die Daten sind, die sich aus dem Verarbeitungsschritt ergeben, der für die längste Zeit gespeichert worden ist.

15. Verfahren nach einem der Ansprüche 9 bis 14, **dadurch gekennzeichnet, daß** der Satz der Daten, die in dem Datenfluß detektiert werden, einen Untertitel darstellt, der aus kodierten Daten in dem Fluß der gemäß der Norm des MPEG 2-System-Transportnorms übertragen wird, und daß die Verarbeitung der Daten die Dekodierung der kodierten Daten ist, und daß die Auswertung der Daten in der Wiedergabe der dekodierten Daten auf einem Bildschirm besteht.

16. Verfahren nach Anspruch 15, **dadurch gekennzeichnet, daß** die Minimaldauer (d) der Wiedergabe der dekodierten Daten proportional ist zu einem Parameter (m), der von Wichtungsmitteln abhängig ist, die mit der Sprache verknüpft sind, in der der Untertitel wiedergegeben werden soll.

## Claims

1. A device for time-managing the utilization of data detected in a data flow and constituting at least one data set, the device comprising a circuit for processing the data detected, a memory (Z1, Z2) making it possible to store the data detected, the data currently being processed, the processed data intended to be utilized and the processed data undergoing utilization, the utilization of the processed data having to be triggered at a given theoretical instant ($T_R$), **characterized in that** it comprises a circuit (MP) for calculating a minimum duration (d) of utilization of the data, which is proportional to the amount (L) of data contained in the data set.

2. The device as claimed in claim 1, **characterized in that** the minimum duration (d) is an increasing function of the size of an area of the memory (Z1, Z2) empty of data.

3. The device as claimed in claim 2, **characterized in that** the minimum duration (d) is proportional, at the instant t+$\Delta$t, to the quantity Xp(t+$\Delta$t) such that:

$$Xp(t+\Delta t) = K_P \times EM(t+\Delta t)$$

where
$K_P$ is a positive real number and EM(t+$\Delta$t) a data item representing the size of the area of the memory (Z1, Z2) empty of data at the instant t+$\Delta$t, $\Delta$t representing the duration separating the detection of two successive data sets.

4. The device as claimed in claim 3, **characterized in that** the minimum duration (d) is proportional, at the instant t+$\Delta$t, to the quantity Xp,i(t+$\Delta$t) such that:

$$Xp,i(t+\triangle t) = Xp(t+\Delta t) + Ki \times I(t+\Delta t),$$

where
Ki is a positive real number, and
I(t+$\Delta$t) = I(t) - R with I(t+$\Delta$t) such that -I1<I(t+$\Delta$t) <I2 and
R = $T_A$ - $T_R$, $T_A$ being the instant at which the utilization of the data begins and $T_R$ the theoretical instant at which the utilization of the data is to be triggered.

5. The device as claimed in claim 4, **characterized in that** the minimum duration is proportional, at the instant t+$\Delta$t, to the quantity Xp,i,d(t+$\Delta$t) such that:

$$Xp,i,d(t+\Delta t) = Xp,i(t+\Delta t) - Kd \times (EM(t+\Delta)-EM(t))/\Delta t),$$

where Kd is a positive real number.

6. The device as claimed in any one of claims 1 to 5, **characterized in that** the area of the memory (Z1, Z2) for storing the processed data intended to be utilized is divided into various memory spaces each containing a data set and **in that** it comprises a counter (CNT) for tagging the various memory spaces as they are being filled so that the utilized data are those contained in the memory space tagged first.

7. The device as claimed in any one of claims 1 to 6, **characterized in that** the detected data set represents a subtitle consisting of coded data detected in a flow of data conveyed according to the MPEG 2 System transport standard and **in that** the processing circuit is a circuit for decoding the coded data, the utilization of the data being the displaying of the decoded data on screen.

8. A decoder operating as claimed in the MPEG 2 video standard, **characterized in that** it comprises a device as claimed in claim 7.

9. A process for time-managing the utilization of data detected in a data flow and constituting at least one data set, the process comprising a step of storing the detected data, a step of processing the stored data, a step of storing the data emanating from the processing step and a step of utilizing the stored data emanating from the processing step, the utilization of the processed data having to be triggered at a given theoretical instant ($T_R$), **characterized in that** it comprises a step of calculating a minimum duration (d) of utilization of the data, which is proportional to the amount of data (L) contained in the data set.

10. The process as claimed in claim 9, **characterized in that** the minimum duration (d) is an increasing function of the size of a data storage area empty of data.

11. The process as claimed in claim 10, **characterized in that** the increasing function is proportional to the quantity $Xp(t+\triangle t)$ such that:

$$Xp(t+\triangle t) = K_P \times EM(t+\triangle t),$$

where

$K_P$ is a positive real number and $EM(t+\triangle t)$ a data item representing the size of the data storage area empty of data at the instant $t+\triangle t$, $\triangle t$ being a duration representing the detection of two successive subtitles.

12. The process as claimed in claim 11, **characterized in that** the increasing function is proportional, to the quantity $Xp,i(t+\triangle t)$ such that:

$$Xp,i(t+\triangle t) = Xp(t+\triangle t) + Ki \times I(t+\triangle t),$$

where

Ki is a positive real number, and
$I(t+\Delta t) = I(t) - R$ with $I(t+\Delta t)$ such that $-I1 < I(t+\Delta t) < I2$, and
$R = T_A - T_R$, $T_A$ being the instant at which the utilization of the data begins
and $T_R$ the theoretical instant at which the utilization of the data is to be triggered.

13. The process as claimed in claim 12, **characterized in that** the increasing function is proportional to the quantity $Xp,i,d(t+\Delta t)$ such that:

$$Xp,i,d(t+\Delta t) = Xp,i(t+\Delta t) - Kd \times (EM(t+\Delta t)-EM(t))/\Delta t,$$

where

Kd is a positive real number.

14. The process as claimed in any one of claims 9 to 13, **characterized in that** it comprises a step of counting making it possible for the utilized data to be the data emanating from the processing step which has been stored for the longest time.

15. The process as claimed in any one of claims 9 to 14, **characterized in that** the set of data detected in the data flow represents a subtitle consisting of coded data in a data flow conveyed according to the MPEG 2 System transport standard, **in that** the processing of the data is the decoding of the coded data and **in that** the utilization of the data is the displaying of the decoded data on screen.

16. The process as claimed in claim 15, **characterized in that** the minimum duration (d) of display of the decoded data is proportional to a parameter (m) dependent on weighting means related to the language in which the subtitle is to be displayed.

Dst

Z2

BV1
BV2
BVn

E(t)

CNT

E

D

d

I

MP

Z1

BR1
BR2
BRm

ST

R

m

L